# EUROPÄISCHE PATENTSCHRIFT

(11) **EP 2 316 666 B1**
(45) Veröffentlichungstag und Bekanntmachung des Hinweises auf die Patenterteilung: **20.02.2013**
(21) Anmeldenummer: 10178550.9
(22) Anmeldetag: 23.09.2010
(51) Int. Cl.: B60C 11/01, B60C 11/04, B60C 11/12

(54) **Fahrzeugluftreifen**
Pneumatic tyres for vehicles
Pneus de véhicule

(30) Priorität: 29.10.2009 DE 102009044361
(43) Veröffentlichungstag der Anmeldung: 04.05.2011
(73) Patentinhaber: Continental Reifen Deutschland GmbH, 30165 Hannover (DE)
(72) Erfinder: Behr, Ulrich, 30169, Hannover (DE)
(74) Vertreter: Finger, Karsten

(56) Entgegenhaltungen:
- DE-A1-102008 015 978
- JP-A- 2000 177 322
- JP-A- 2004 009 999

## Beschreibung

Die Erfindung betrifft einen Fahrzeugluftreifen mit einem Laufstreifen, welcher durch Umfangsrillen und sonstige Rillen oder Einschnitte gebildete Profilblöcke oder blockartige Profilelemente aufweist, in welchen in axialer Richtung verlaufende Querrillen ausgebildet sind, deren laufstreifeninnenseitig gelegenen Enden sich innerhalb der Profilelemente befinden, wobei an den laufstreifeninnenseitigen Enden der Querrillen zwischen der Laufstreifenperipherie und dem Rillenboden jeweils eine Böschungsflanke verläuft.

Ein derartiger Fahrzeugluftreifen ist aus der JP 2002-248910 A bekannt. Der Laufstreifen weist als Profilelemente zwei durch eine zentrale, in Reifenumfangsrichtung umlaufende, breite Umfangsrille voneinander getrennte Profilrippen auf, die durch ausgeprägt breite und im Wesentlichen in axialer Richtung verlaufende Querrillen strukturiert sind, deren laufstreifeninnenseitige Enden sich innerhalb der Profilrippen befinden. Die Böschungsflanken zwischen der Laufstreifenperipherie und dem Rillenboden der Querrillen sind gestuft ausgeführt und weisen somit eine Anzahl von in Umfangsrichtung verlaufenden Kanten auf, die das beim Abrollen des Reifens entstehende Reifen/Fahrbahngeräusch ungünstig beeinflussen.

Aus der JP 2000-177322 A ist ein Fahrzeugluftreifen mit einem Laufstreifen bekannt, welcher Quernuten aufweist, die von den Laufstreifenrändem bis in den Bereich der Laufstreifenmitte verlaufen. Die Böschungsflanken an den laufstreifeninnenseitigen Enden der Quernuten erstrecken sich im Wesentlichen in radialer Richtung und weisen, beginnend bei der Laufstreifenperipherie und etwa über die Hälfte der radialer Erstreckung der Böschungsflanken verlaufend, jeweils einen im Querschnitt konvex gekrümmten Flankenabschnitt auf.

Bei dem aus der JP 2004-009999 A bekannten Laufstreifen eines Fahrzeugluftreifens sind schulterseitig jeweils Quernuten vorgesehen, deren Nutgrund im Querschnitt gestuft verläuft. Der Laufstreifen des aus der DE 2008 015978 A1 bekannten Luftreifens weist Schulterblockreihen auf, die jeweils durch eine Vielzahl von Querrillen in Schulterblöcke gegliedert und durch eine schmale in Umfangsrichtung umlaufende Nut zweigeteilt sind. Die laufstreifeninnenseitigen Böschungsflanken der Querrillen verlaufen in radialer Richtung und sind zum Nutgrund zu gerundet.

Der Erfindung liegt die Aufgabe zugrunde, einen Reifen der eingangs genannten Art derart auszuführen, dass die Böschungsflanken der Querrillen keinen nachteiligen Einfluss auf das Reifen/Fahrbahngeräusch aufweisen.

Gelöst wird die gestellte Aufgabe erfindungsgemäß dadurch, dass die Böschungsflanke, im Reifenquerschnitt betrachtet, flach S-förmig verläuft und Übergangsabschnitte, welche gerundete Übergänge zur Laufstreifenperipherie und zum Rillenboden bilden, und einen zwischen diesen befindlichen mittleren Abschnitt, welcher einen Neigungswinkel mit der radialen Richtung einschließt, der zwischen 50° und 70° beträgt, aufweist.

Bei erfindungsgemäß ausgeführten Querrillen weisen die Böschungsflanken an den laufstreifeninnenseitigen Enden keine Kanten auf, die das Reifen/Fahrbahngeräusch ungünstig beeinflussen könnten. Darüber hinaus sind derart ausgeführte Böschungsflanken für das Wasserableitvermögen der Querrillen von Vorteil, da sie Verwirbelungen vermeiden und für einen gleichmäßigen Abtransport von Wasser aus dem mittleren Bereich des Laufstreifens nach außen sorgen. Des Weiteren wirken sich die flach verlaufenden Böschungsflanken positiv auf die Steifigkeit der Profilpositive aus.

Bei einer bevorzugten Ausführungsform der Erfindung weisen die Übergangsabschnitte jeweils einen Rundungsradius auf, welcher zwischen 1 mm und 7 mm beträgt. Dabei ist ein etwas größerer Rundungsradius im Allgemeinen für das Wasserableitvermögen und das entstehende Reifen-/Fahrbahngeräusch von Vorteil.

Die Größe der Rundungsradien nimmt auch Einfluss auf die Steifigkeit der Profilpositive. Dieser Einfluss kann gesteuert werden, indem die Übergangsabschnitte übereinstimmend große Rundungsradien oder unterschiedlich große Rundungsradien aufweisen.

Bei einer bevorzugten Ausführungsform der Erfindung sind die Übergangsabschnitte derart ausgeführt, dass sie von der Profiloberseite in den mittleren Abschnitt und von diesem in den Rillenboden krümmungsstetig übergehen. Die Böschungsflanken erscheinen daher als mit der Profiloberseite und dem Rillenboden einheitliche Flächen.

Von besonderem Vorteil ist die Anordnung von Querrillen mit erfindungsgemäß ausgeführten Böschungsflanken in reifenschulterseitig gelegenen Profilelementen des Laufstreifens, welche zudem über den den Boden berührenden Teil des Laufstreifens hinaus verlaufen. Gerade in diesem Laufstreifenbereich wirkt sich der Vorteil erfindungsgemäß ausgeführter Querrillen, den Abtransport von Wasser zu unterstützen, besonders aus.

Es ist jedoch auch möglich, die Querrillen in im mittleren Bereich des Laufstreifens gelegenen Profilelementen vorzusehen, wobei sie dann mit ihren laufstreifenaußenseitigen Enden in eine Umfangsrille münden sollten. Auch hier unterstützen erfindungsgemäß ausgeführte Querrillen den Abtransport von Wasser aus dem Laufstreifenmittelbereich.

Weitere Merkmale, Vorteile und Einzelheiten werden anhand der schematischen Zeichnung, die ein Ausführungsbeispiel darstellt, näher beschrieben. Es zeigen
Fig. 1 einen Querschnitt durch einen Teilbereich eines Laufstreifens eines Fahrzeugluftreifens und
Fig. 2 eine Draufsicht auf einen Teilbereich des Laufstreifens.

Die Figuren zeigen einen bei der einen Reifenschulter gelegenen Bereich eines Laufstreifens eines Fahrzeugluftreifens, wobei an der Reifenschulter als Profilelemente eine Profilrippe 1 vorgesehen ist, welche durch eine in Umfangsrichtung umlaufende Umfangsrille 2 von den zur Laufstreifenmitte zu anschließenden Profilelementen, welche Profilblockreihen oder Profilrippen sein können, getrennt ist. Im Wesentlichen in axialer Richtung verlaufende Querrollen 4 verleihen der Profilrippe 1 eine blockartige Struktur. Die Querrillen 4 weisen in einem Abstand a von einigen mm, insbesondere von 3 mm bis 5 mm, zur Umfangsrille 2 ihr laufstreifeninnenseitiges Ende auf und münden somit nicht in die Umfangsrille 2. Die Querrillen 4 erstrecken sich über den Reifenschulterbereich und verlaufen somit über den bodenberührenden Teil des Laufstreifens hinaus. Jede Querrille 4 ist von einem Rillenboden 5, zwei seitlichen Rillenflanken 7a und 7b sowie einer in Verlängerung des Rillenbodens 5 verlaufenden Böschungsflanke 6 begrenzt, welche zwischen dem Rillenboden 5 und der Laufstreifenperipherie am laufstreifeninnenseitigen Ende der Querrille 4 verläuft. Die Querrille 4 weist an jenem Ende des Rillenbodens 5, welcher an die Böschungsflanke 6 anschließt, ihre größte Tiefe auf und wird gegen das zweite schulterseitig außen gelegene Ende der Querrille 4 kontinuierlich seichter, sodass an diesem Ende die Querrille 4 keine nennenswerte Tiefe mehr aufweist.

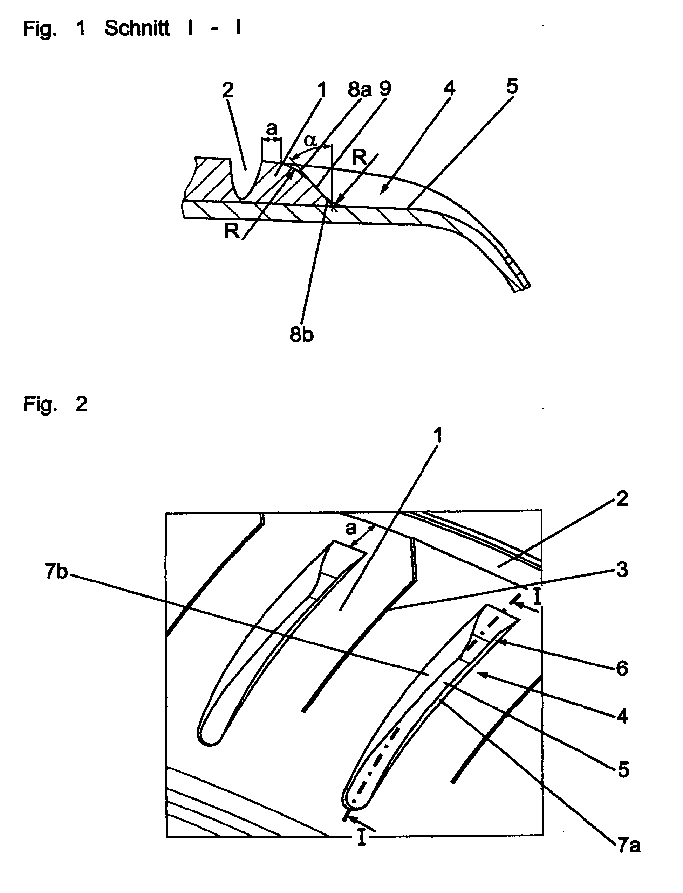

Wie insbesondere die Schnittdarstellung in Fig. 1 verdeutlicht, weist die Böschungsflanke 6 einen besonderen Verlauf auf. Im Querschnitt ist der Verlauf der Böschungsflanke 6 flach S-förmig, derart, dass die Übergangsabschnitte 8a, 8b der Böschungsflanke 6 zur Laufstreifenperipherie und zum Rillenboden 5 kantenfreie Rundungen mit einem Radius R von 1 mm bis 7 mm sind. Die Übergangsabschnitte 8a, 8b können übereinstimmende oder unterschiedliche Rundungsradien R aufweisen. Insbesondere werden die Übergangsabschnitte 8a, 8b derart ausgeführt, dass die Übergangsabschnitte 8a, 8b derart ausgeführt sind, dass sie von der Profiloberseite in den mittleren Abschnitt 9 und von diesem in den Rillenboden 5 krümmungsstetig übergehen.

Zwischen den Übergangsabschnitten 8a, 8b weist die Böschungsflanke 6 einen mittleren Abschnitt 9 auf, welcher mit der radialen Richtung einen Winkel α von 50° bis 70° einschließt. Wie dargestellt, kann ferner die Böschungsflanke 6 - bedingt durch die Schrägstellung der seitlichen Rillenflanken 7a, 7b relativ zur radialen Richtung - eine Breite aufweisen, die sich ausgehend von der Laufstreifenperipherie bis zum Rillenboden 5 kontinuierlich verringert.

Erfindungsgemäß ausgebildete Querrillen können auch in Profilelementen, beispielsweise in Profilrippen, vorgesehen sein, welche im mittleren Bereich des Laufstreifens verlaufen. In diesem Fall münden die laufstreifenaußenseitigen Enden der Querrillen in eine Umfangsrille.

Durch die kantenfreie Ausführung der Böschungsflanken 6 - insbesondere durch ihren gegenüber der radialen Richtung flachen Verlauf, die gerundeten Übergangsabschnitte 8a, 8b und durch deren krümmungsstetigen Übergänge, wie oben erwähnt - wird das Reifen/Fahrbahngeräusch beim Abrollen des Reifens günstig beeinflusst. Darüber hinaus weisen erfindungsgemäß ausgeführte Querrillen 4 ein verbessertes Wasserdränagevermögen auf, da sie Verwirbelungen vermeiden und den Abtransport von Wasser zu den Laufstreifenrändern unterstützen.

### Bezugszeichenliste

- 1 .....: Profilrippe
- 2 .....: Umfangsrille
- 4 .....: Querrillen
- 5 .....: Rillenboden
- 6 .....: Böschungsflanke
- 7a .....: seitliche Rillenflanke
- 7b .....: seitliche Rillenflanke
- 8a .....: Übergangsabschnitt
- 8b .....: Übergangsabschnitt
- 9 .....: mittlerer Abschnitt
- α .....: Winkel
- a .....: Abstand

## Patentansprüche

1. Fahrzeugluftreifen mit einem Laufstreifen, welcher durch Umfangsrillen (2) und sonstige Rillen oder Einschnitte gebildete Profilblöcke oder blockartige Profilelemente aufweist, in welchen in axialer Richtung verlaufende Querrillen (4) ausgebildet sind, deren laufstreifeninnenseitig gelegenen Enden sich innerhalb der Profilelemente befinden, wobei an den laufstreifeninnenseitigen Enden der Querrillen (4) zwischen der Laufstreifenperipherie und dem Rillenboden (5) jeweils eine Böschungsflanke (6) verläuft, wobei die Böschungsflanke (6), im Reifenquerschnitt betrachtet, flach S-förmig verläuft, **dadurch gekennzeichnet,**
**dass** die Böschungsflanke (6) Übergangsabschnitte (8a, 8b), welche gerundete Übergänge zur Laufstreifenperipherie und zum Rillenboden (5) bilden, und einen mittleren Abschnitt (9), welcher einen Neigungswinkel (α) mit der radialen Richtung einschließt, der zwischen 50° und 70° beträgt, aufweist.

2. Fahrzeugluftreifen nach Anspruch 1, **dadurch gekennzeichnet, dass** die Übergangsabschnitte (8a, 8b) jeweils einen Rundungsradius (R) aufweisen, welcher zwischen 1 mm und 7 mm beträgt.

3. Fahrzeugluftreifen nach Anspruch 2, **dadurch gekennzeichnet, dass** die Übergangsabschnitte (8a, 8b) übereinstimmend große Rundungsradien (R) aufweisen.

4. Fahrzeugluftreifen nach Anspruch 2, **dadurch gekennzeichnet, dass** die Übergangsabschnitte (8a, 8b) unterschiedlich große Rundungsradien (R) aufweisen.

5. Fahrzeugluftreifen nach einem der Ansprüche 1 bis 4, **dadurch gekennzeichnet, dass** die Übergangsabschnitte (8a, 8b) derart ausgeführt sind, dass sie von der Profiloberseite in den mittleren Abschnitt (9) und von diesem in den Rillenboden (5) krümmungsstetig übergehen.

6. Fahrzeugluftreifen nach einem der Ansprüche 1 bis 5, **dadurch gekennzeichnet, dass** die Querrillen (4) in reifenschulterseitig gelegenen Profilelementen (1) des Laufstreifens ausgebildet sind und über den bodenberührenden Teil des Laufstreifens hinaus laufen.

7. Fahrzeugluftreifen nach einem der Ansprüche 1 bis 5, **dadurch gekennzeichnet, dass** die Querrillen in im mittleren Laufstreifenbereich gelegenen Profilelementen des Laufstreifens ausgebildet sind und mit ihren laufstreifenaußenseitigen Enden in eine Umfangsrille münden.

## Claims

1. Pneumatic vehicle tyre having a tread with profile blocks, or block-like profile elements, which are formed by circumferential channels (2) and other channels or sipes and into which are formed transverse channels (4) running in the axial direction, the tread-inside ends of which transverse channels are situated within the profile elements, wherein at the tread-inside ends of the transverse channels (4), in each case one sloped flank (6) runs between the tread periphery and the channel base (5), wherein the sloped flank (6) runs with a flat S-shaped form as viewed in the cross section of the tyre, **characterized in that** the sloped flank (6) has transition portions (8a, 8b), which form rounded transitions to the tread periphery and to the channel base (5), and a central portion (9), which encloses an angle of inclination (α) of between 50° and 70° with the radial direction.

2. Pneumatic vehicle tyre according to Claim 1, **characterized in that** the transition portions (8a, 8b) each have a rounding radius (R) of between 1 mm and 7 mm.

3. Pneumatic vehicle tyre according to Claim 2, **characterized in that** the transition portions (8a, 8b) have rounding radii (R) of corresponding magnitude.

4. Pneumatic vehicle tyre according to Claim 2, **characterized in that** the transition portions (8a, 8b) have rounding radii (R) of different magnitude.

5. Pneumatic vehicle tyre according to one of Claims 1 to 4, **characterized in that** the transition portions (8a, 8b) are designed so as to merge with a continuous curvature from the profile top side into the central portion (9) and from the latter into the channel base (5).

6. Pneumatic vehicle tyre according to one of Claims 1 to 5, **characterized in that** the transverse channels (4) are formed in tread profile elements (1) situated at the tyre shoulder and run beyond that part of the tread which makes contact with the ground.

7. Pneumatic vehicle tyre according to one of Claims 1 to 5, **characterized in that** the transverse channels are formed in tread profile elements situated in the central tread region and issue with their tread-outside ends into a circumferential channel.

## Revendications

1. Pneu de véhicule comprenant une bande de roulement, qui présente des blocs profilés ou des éléments profilés en forme de bloc formés par des gorges périphériques (2) et d'autres gorges ou entailles, dans lesquels sont réalisées des gorges transversales (4) s'étendant dans la direction axiale, dont les extrémités situées du côté intérieur de la bande de roulement se trouvent à l'intérieur des éléments profilés, un flanc latéral (6) s'étendant à chaque fois au niveau des extrémités des gorges transversales (4) du côté intérieur de la bande de roulement entre la périphérie de la bande de roulement et le fond de gorge (5),
le flanc latéral (6), considéré en coupe transversale du pneu, s'étendant en forme de S aplati, **caractérisé en ce que**
le flanc latéral (6) présente des portions de transition (8a, 8b) qui forment des transitions arrondies avec la périphérie de la bande de roulement et avec le fond de gorge (5), et une portion centrale (9) qui forme un angle d'inclinaison (α) avec la direction radiale, lequel est compris entre 50° et 70°.

2. Pneu de véhicule selon la revendication 1, **caractérisé en ce que** les portions de transition (8a, 8b) présentent à chaque fois un rayon d'arrondi (R) qui est compris entre 1 mm et 7 mm.

3. Pneu de véhicule selon la revendication 2, **caractérisé en ce que** les portions de transition (8a, 8b) présentent des rayons d'arrondi (R) de tailles coïncidentes.

4. Pneu de véhicule selon la revendication 2, **caractérisé en ce que** les portions de transition (8a, 8b) présentent des rayons d'arrondi (R) de tailles différentes.

5. Pneu de véhicule selon l'une quelconque des revendications 1 à 4, **caractérisé en ce que** les portions de transition (8a, 8b) sont réalisées de telle sorte qu'elles se prolongent avec une courbure constante depuis le côté supérieur du profilé dans la portion centrale (9) et depuis celle-ci dans le fond de gorge (5).

6. Pneu de véhicule selon l'une quelconque des revendications 1 à 5, **caractérisé en ce que** les gorges transversales (4) sont réalisées dans des éléments profilés (1) de la bande de roulement situés du côté de l'épaulement du pneu et s'étendent au-delà de la partie de la bande de roulement en contact avec le sol.

7. Pneu de véhicule selon l'une quelconque des revendications 1 à 5, **caractérisé en ce que** les gorges transversales sont réalisées dans des éléments profilés de la bande de roulement placés dans la région centrale de la bande de roulement, et débouchent avec leurs extrémités du côté extérieur de la bande de roulement dans une gorge périphérique.
